# EUROPEAN PATENT SPECIFICATION

(11) **EP 2 826 363 B1**
(45) Date of publication and mention of the grant of the patent: **29.06.2016**
(21) Application number: 14153257.2
(22) Date of filing: 30.01.2014
(51) Int. Cl.: A01G 17/08

(54) **Hand-held binding apparatus and method for use in agriculture**
Tragbare Bindevorrichtung und Verfahren zur Verwendung in der Landwirtschaft
Appareil de reliure à main et procédé d'utilisation dans l'agriculture

(30) Priority: 19.07.2013 EP 13177291
(43) Date of publication of application: 21.01.2015
(73) Proprietor: FELCO Motion SA, 2206 Les Geneveys-sur-Coffrane (CH)
(72) Inventor: Charpilloz, Jordan, 2112 Môtiers (CH); Koeller, Jeroen, 2035 Corcelles (CH); Müller, Nicolas, 2610 Saint-Imier (CH); Golay, Fabien, 2610 Saint-Imier (CH); Bieler, Thierry, 1112 Echichens (CH); Cardoletti, Laurent, 1844 Villeneuve (CH); Tinguely, Simon, 1007 Lausanne (CH); Koechli, Christian, 1462 Yvonnand (CH); Fleury, Christian, 1585 Cotterd (CH); Rothenbühler, Yves, 2037 Montmollin (CH)
(74) Representative: P&TS SA (AG, Ltd.)

(56) References cited:
- EP-A1- 0 763 323
- EP-A1- 1 114 578
- WO-A1-02/28167
- WO-A1-2010/128103
- US-A- 1 470 861

## Description

### Field of the invention

The present invention concerns a hand-held binding apparatus for use in agriculture, notably for binding grape vines to support cables. The present invention comprises a hand-held binding apparatus which comprises a cutting system for cutting a section of wire after it has been pulled around the objects to bind.

### Description of related art

Binding apparatuses which are available today, such as the binding apparatus of EP1114578, comprise a pulling member which pulls wire around objects such as a vine shoots around which the wire is to bind. The wire is twisted and then cut using a fixed knife and a block on the rotating member. A reliable cut of the wire depends on a very precise alignment between the block on the pulling member and the fixed knife; this is difficult to achieve since the pulling member is a large rotating piece which is difficult to manufacture and mount with a very high precision. Therefore, this apparatus sometimes fails to cut the wire after it has been pulled around the branch and support to bind. Additionally, the twisting of the uncut wire creates an important tension in the wire, which sometimes causes the wire or the object to bind to break.

Other agricultural binding apparatuses, such as the binding apparatus of EP0763323, push wire around vine shoots around which the wire is to bind. In these agricultural binding apparatuses a wire is cut inside the apparatus by a cutter actuated by a cam and lever system. This construction is further devices are known from WO 02/28167 A1 and US 1 470 861 A.

It is an aim of the present invention to mitigate or obviate the above-mentioned disadvantages.

### Summary of the invention

According to the present invention there is provided a hand-held binding apparatus for binding a branch such as a vine shoot to a support using wire, the binding apparatus comprising a housing, a pulling member which can hold a wire, and which is operable to move around the branch and support, so that the pulling member pulls the wire around the branch and support; a cutting system comprising a wire holder which is fixed relative to the housing and which can hold the wire, and a cutting member which is mounted pivotably with respect to the wire holder; and an actuating member which can engage the cutting member to cut the wire, wherein the actuating member is provided on the pulling member and positioned on the pulling member such that the actuating member engages the cutting member to force the cutting member to rotate relative to the wire holder to cut the wire after the pulling member has moved around the branch and support.

In a preferred embodiment the actuating member is placed on the pulling member at an angle belonging to the range 5°-30°, said angle being formed between the actuating member and an ideal horizontal line having the same direction of the main length of the apparatus.

This has the advantage that the cutting system is entirely separated from the pulling member, although it is actuated by an actuating member provided on the pulling member. Therefore, the quality of the cut does not depend on the precision of mounting and manufacturing of the pulling member; a precise cut can be achieved even with a slightly misplaced pulling member or with a pulling member which is not manufactured with a perfect precision. It is only requested from the pulling member to be able to actuate the cutting member, which can be mounted separated from the pulling member.

This also has the advantage that the cutting system is actuated directly by an actuating member provided on the pulling member, so that no other elements are requested to actuate the cutting system. This also provides for a perfect synchronization between the step of pulling the wire and the subsequent or simultaneous step of cutting the wire.

The binding apparatus may comprise a first motor for actuating the pulling member to move around the branch and support.

Preferably the first motor is configured to actuate the pulling member to move around the branch and support at a constant speed.

The apparatus may further comprise gears which transmit torque generated by the first motor to the pulling member. Preferably the pulling member comprises teeth with engage teeth on the gears.

The apparatus may further comprise a second motor for selectively actuating the tension adjusting means to push or restrain the wire.

The apparatus may further comprise gears which transmit torque generated by the first motor to the tension adjusting means.

The tension adjusting means may comprise at least a first roller which mechanically cooperates with the wire by friction. A second motor may operate to adjust the speed of rotation of the first roller so that the tension in the wire is adjusted. For example, if the first roller is rotated at a speed which is faster than the speed at which the pulling member pulls the wire, then first roller will push the wire in the direction which the pulling member is pulling the wire so that the tension in the wire is decreased. Conversely if the first roller is rotated at a speed which is lower than the speed at which the pulling member is pulling the wire, then the first roller will restrain the wire which the pulling member is pulling so that the tension in the wire is increased.

The tension adjusting means may further comprise a second roller, wherein the wire is arranged to extend between the first and second rollers and to mechanically cooperate with both the first and second rollers by friction. The second motor may operate to adjust the speed of rotation of the first and second rollers so that the tension in the wire is adjusted. Alternatively, the second motor may operate to rotate one of the rollers, wherein the other roller is driven by the first roller by friction.

The first roller may comprise a smooth surface with which the wire mechanically cooperates.

The second roller may comprise a corrugated surface with which the wire mechanically cooperates.

The apparatus further may further comprise software which is configured to control the tension adjusting means, so that the tension in the wire is maintained within a predefined range.

Preferably the software is configured to control the second motor so that the tension in the wire is within a predefined range.

Preferably the software is configured to control the speed at which the second motor rotates the first and second rollers to regulate the tension in the wire, so that the tension in the wire is maintained within the predefined range.

The software may be further configured to control the speed at which the pulling member moves around the branch and support, so that the tension of the wire can also be controlled by the speed of rotation of the pulling member.

Preferably the actuating member is secured to the pulling member at a position on the pulling member which ensures that the actuating member can engage the cutting member to actuate the cutting member shortly after the pulling member has moved around the branch and support, possibly when the pulling member is still rotating.

The cutting system may comprise a moveable cutting member and a wire holder which holds the wire, wherein the cutting member is moveable relative to the wire holder so that the wire can be cut.

The actuating member may be a cam. The actuating member which is secured to the pulling member may be a projection which is secured to the pulling member and projects from the pulling member. The projection may be arranged on the pulling member so that rotation of the pulling member around the object to bind will bring the projection into abutment with the moveable cutting member. Preferably the projection will abut the moveable cutting member immediately after the pulling member has been rotated around the branch and support, or at the end of this rotation.

The pulling member preferably pushes the moveable cutting member to move the moveable cutting member relative to the wire holder to effect cutting wire held within the wire-holder. More preferably the pulling member pushes the moveable cutting member to move the moveable cutting member relative to the wire holder to cut the wire held within the wire-holder at the end of rotation of the pulling member.

Once the wire is cut the section of wire, which has been pulled by the pulling member around the branch and support, becomes mechanically independent of the rest of the wire which is held by the wire holder.

The apparatus may comprise a rotatable element which is operable to twist opposite ends of a section of the wire around each other.

Preferably the apparatus further comprises a rotatable element which is operable to twist opposite ends of a section of the wire around each other a predefined number of times.

Preferably the two ends of the wire are twisted around each other immediately after they have been cut. Therefore, the rotation of the rotatable element does not interfere with the uncut wire and does not increase the tension in this wire before it is cut.

Preferably the wire is held by the tension adjusting means while and after it has been cut. Therefore, the end of the wire is still held by the tension adjusting means after it has been cut, so that it is not lost. Preferably the tension adjusting means comprises at least one roller commanded by software.

The apparatus may comprise a means to enable a user to select the number of times which the opposite ends of the section of the wire are twisted around each other.

The apparatus may comprise a means for enabling a user to select a predefined range of tension for the bound wire, for example through selection of the number of twists of the wire.

The apparatus may comprise a means for selecting the number of times which the opposite ends of the section of the wire are twisted around each other. In other words the apparatus may comprise a means for adjusting the number of times which the opposite ends of a section of the wire are twisted around each other by rotation of the rotatable element. Therefore the user can select the number of twists in the wire. In one embodiment, the apparatus comprises a selector for selecting between a first number of twists, for example two, and a second number of twists, for example three.

The rotatable element may comprise a plurality of blades radiating from a central hub. Opposite ends of a section of the wire can be received between the blades so that when the rotatable element is rotated the opposite ends of a section of the wire are twisted around each other.

Preferably the rotatable element is positioned such that as the pulling member moves around the branch and support, the pulling member will move the wire so that it extends between the blades of the rotatable element. Thus after the section of wire has been cut from the rest of the wire by the cutting system, the opposite ends of the section of wire will already be positioned between the blades of the rotatable element ready for twisting.

The tension in the binding may be dictated by the length of the section of wire which has been moved by the pulling member around the branch and support and by the number of twists which are provided at the ends of the section of wire. For the same length of section of wire the tension of the binding will increase with an increasing number of twists which are provided at the ends of the section of wire and will decrease with a decreasing number of twists which are provided at the ends of the section of wire. Likewise for the same number of twists provided at the ends of the section of wire, the tension in the binding will increase with a decreasing length of the section of wire, and will decrease with an increasing length of the section of wire.

Accordingly the user may achieve a binding which has any particular tensions by adjusting the apparatus to move the appropriate length of wire around the branch and support and by adjusting the apparatus to provide the appropriate number of twists in the ends of the section of wire.

The second motor may be configured to actuate the tension adjusting means when the second motor is rotated in a first direction and to actuate the rotatable element when the second motor is rotated in a second, opposite, direction.

The apparatus may comprise gears which transmit torque generated by the second motor when the second motor is rotated in a first direction, to the tension adjusting means, and gears which transmit torque generated by the second motor, when the second motor is rotated in a second, opposite, direction, to the rotatable element.

The tension in the wire when it is pulled by the pulling member may be determined by the torque which the first motor has to apply in order to rotate the pulling member and pull the wire. The tension in the wire when it is pulled by the pulling member may also be determined by the torque which the second motor has to apply in order to push or rotate the wire. The torque exerted by the first and/or second motors corresponds to the electric current supplied to the first respectively to the second motor. Accordingly, the apparatus may further comprise a means for determining the electric current which is input to at least one of the first or second motors so as to determine the tension in the wire, and to adjust the tension adjusting means so that the tension is within a predefined range.

For example the apparatus may use the current which is input to the first motor, to power the first motor, to determine the tension in the wire and may adjust the tension adjusting means so that the eventual tension is within a predefined range. For example, if the branch and support around which the wire is to bind have large diameters, then the current which is input to the first motor to move the pulling member around the branch and support will be large. Accordingly it can be determined that the tension adjusting means should be operated to push the wire to reduce the tension in the wire so that the tension in the wire is maintained within the predefined range. Likewise if the branch and support around which the wire is to bind have small diameters, then the current which is input to the first motor to move the pulling member around the branch and support will be small. Accordingly it can be determined that the tension adjusting means should be operated to restrain the wire to increase the tension in the wire so that the tension in the wire is maintained within the predefined range.

In one embodiment, the first and the second motor are software controlled using a suitable microcontroller for controlling motor drivers. The microcontroller may be programmed so as to control the position and speed of the first motor at any given time, so as to pull the wire at a prescribed speed and at the prescribed time. The microcontroller may determine the current that needs to be supplied to the first and/or second motor to reach this prescribed speed, and determine from this or these values a suitable rotation speed for the second motor in order to get a tension and/or length of wire within a predefined range.

The apparatus may comprise a sensorless position detection system for detecting the angular position of the pulling member. A sensorless position detection system is a system for detecting the angular position of the rotor of a motor based on signals supplied to the motor. An example of sensorless position detection system is disclosed in EP2471171. A sensorless position detection system could be used to determine the position of the rotor of the second motor 11 too.

The position detection system may comprise at least one magnet which is fixed to the pulling member and at least one Hall or magnetoresistive sensor which is fixed relative to a housing of the apparatus, for detecting when the pulling member is at a predefined angular position.

The sensorless position detection system may further comprise a second magnet which is fixed to the pulling member and a second Hall or magnetoresistive sensor which is fixed relative to a housing of the apparatus, so that the direction in which the pulling member is moved around branch and support can be determined.

A signal at the output of the first and/or second Hall or magnetoresistive sensor(s) may be used for recalibrating the sensorless position detection system each time the first or second magnet passes in front of the corresponding Hall or magnetoresistive sensor.

The pulling member may have a C-shaped profile. It may be rotated by the first motor to pull the wire around the objects to bind.

The pulling member may comprise an engaging means through which the wire is introduced.

The engaging means may comprise a fixed member secured to the pulling member and including a gorge through which the wire is introduced. The width of the gorge is larger than the diameter of the wire. The gorge can be covered at its upper side, by forming a short channel. The channel is short as its length is lower than the length of the pulling member. The function of the gorge is to introduce the wire in the bending part of the apparatus. A bending member, such as a pin, fixed relative to the housing of the apparatus may be provided to bend the wire downstream of the fixed member when the pulling member is rotated so that the fixed member is moved relative to the pin.

The apparatus may further comprise a system for automatically actuating the apparatus to bind a branch to a support using wire, when the branch and support are engaged by the apparatus.

For example, the apparatus may comprise a means for detecting if the branch and support have been received within the C-shaped pulling member; upon detection the system will automatically actuate the apparatus to bind the branch to a support using wire, without the user having to press any buttons. For example, upon detection that the branch and support have been received within the C-shaped pulling member, the system will automatically actuate the C-shaped pulling member to move around the branch and support so that it pulls the wire around the branch and support, and the other components of the apparatus such as the tension adjusting means etc. so that the apparatus binds the branch to the support, without the user having to press any buttons.

The system for automatically actuating the apparatus may comprise a sensor, such as an optical, capacitive or touch sensor, to detect if the branch and support have been received within the C-shaped pulling member. It will be understood that the system may comprise any other suitable sensing means.

### Brief Description of the Drawings

An embodiment of the present invention will be now be described, by way of example only, with reference to the following Figures in which:
Fig. 1 provides a perspective view of a hand-held binding apparatus according to an embodiment of the present invention;
Fig. 2 provides a cross-sectional view of the hand-held binding apparatus shown in Fig.1;
Fig. 3 provides a perspective view of the hand-held binding apparatus shown in Figs.1 and 2, and in particular of the tension adjusting means used in the hand-held binding apparatus;
Figs. 4a and 4b provide a perspective view of the front part of the hand-held binding apparatus shown in Figs.1 and 2, i.e. the part where the binding is performed, in particular of the cutting system used in the hand-held binding apparatus;
Fig. 5 provides a perspective view of the front part of the hand-held binding apparatus shown in Figs.1 and 2, in particular of the rotatable element used in the hand-held binding apparatus.

### Detailed Description of possible embodiments of the Invention

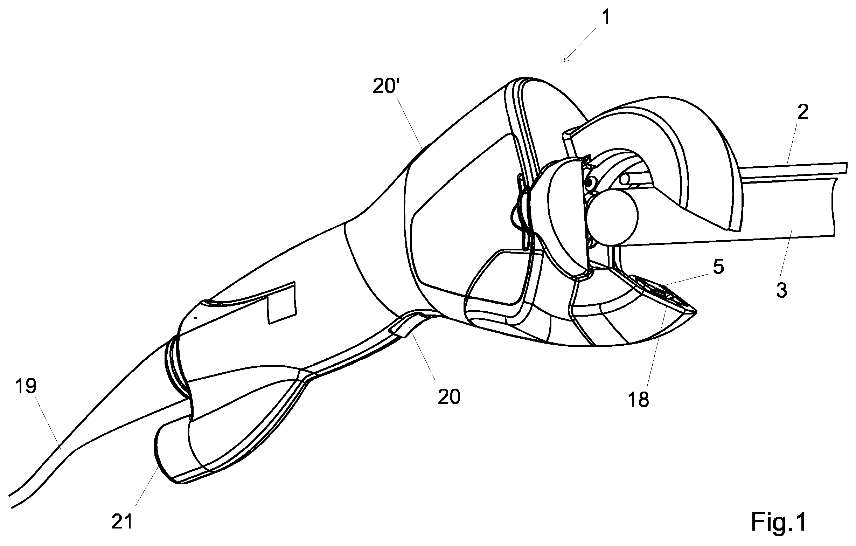

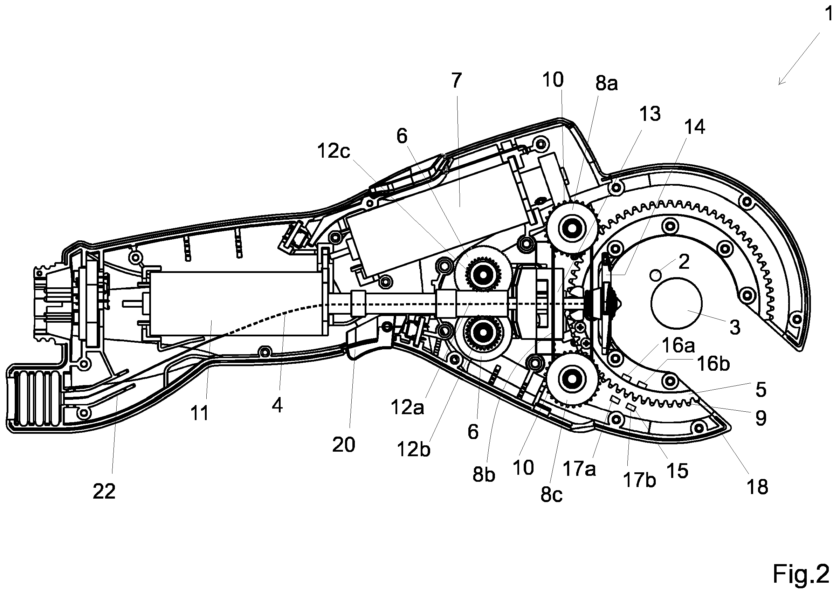

Referring to Figures 1 and 2; Figure 1 provides a perspective view of a hand-held binding apparatus 1 according to an embodiment of the present invention for binding a branch, such as a grape vine shoot, 3 to a support 2, such as a cable, using wire 4; Figure 2 provides a cross-sectional view of the hand-held binding apparatus 1 shown in Fig.1.

The apparatus 1 comprises a pulling member 5 which can hold the wire 4, and which is operable to move around the branch 3 and support 2, so that the pulling member 5 pulls the wire 4 around the branch 3 and support 2. The pulling member 5 has a C-shaped profile.

The apparatus 1 comprises a first motor 7, for actuating the pulling member 5 to move the wire 4 around the branch 3 and support 2 at a constant rotational speed. The apparatus comprises a first pulley 8a and a belt 8b which transmit the torque force generated by the first motor 7 to a second pulley 8c mounted on the same axis than a gear 10; the pulling member comprises a plurality of teeth 9 which engage teeth on the gears 10.

The apparatus 1 further comprises a tension adjusting means 6 which is selectively operable to push, or restrain, this wire 4 which the pulling member 5 pulls, to adjust the tension in the wire 4, so that the tension in the wire 4 can be maintained within a predefined range for tension, and so as to control the length of wire pulled by the pulling member.

The apparatus 1 comprises a second motor 11 for actuating the tension adjusting means 6 to selectively push or restrain the wire 4. Gears 12a,b,c are provided which transmit the torque force generated by the second motor 11 to the tension adjusting means 6.

The apparatus 1 further comprises an electronic circuit (not shown) having a battery for powering the motors 7, 11 with a microcontroller (not shown) for controlling the tensions and currents provided to these motors at any given instant. In one embodiment, the battery and the electronic circuit with microcontroller are provided outside of the housing of the apparatus, for example as a separate unit that me be held for example in a backpack (not shown) and connected to the apparatus through the power and data cable 19.

The microcontroller comprises a software module in which software, for controlling the operation of the various components of the apparatus 1, is stored. The predefined range for tension in the wire 4 is defined by the software at the manufacturing stage. The software stored on the software module controls the tension adjusting means 6 and/or the speed at which the pulling member 5 moves around the branch 3 and support 2 so that the tension in the wire 4 is maintained within the predefined range for tension, and/or so that the length of wire 4 pulled around the branch 3 is within a predetermined range. The software does this by controlling the second and/or first motors respectively; more specifically the software does this by controlling the speed at which the second and/or first motors 11,7 rotate.

The apparatus 1 shown in Figures 1 and 2 further comprises a cutting system 13 to cut the wire 4 so that the section of wire which has been moved around the branch 3 and support 2 can be cut from the rest of wire. The apparatus 1 further comprises a rotatable element 14 which is operable to twist opposite ends of the section of the wire around each other. The cutting system 13 and rotatable element 14 will be described in more detail later.

The apparatus 1 further comprises a sensorless position detection system 15, 16a, 16b for determining the angular position of this pulling member 5 at any given time.

The sensorless position detection system determines the position of the rotor of the first motor 7; this information is used by the microcontroller for determining when to stop rotation of the motor 7 and when to change the sense of rotation of the second motor. The sensorless position detection system may use the currents and tensions provided to the motor 7, and be based for example on technology disclosed in EP2471171.

In order to calibrate regularly the sensorless position detection system, the apparatus further comprises a first or a first and second magnets 16a,b which are fixed to the pulling member 5 and a first and second Hall or magnetoresistive sensors 17a,b which are fixed relative to a housing 18 of the apparatus 1. The sense of the rotation of the pulling member 5 around the branch 3 and support 2 can be determined from the order in which the first and second sensors 17a,b detect the first and second magnets 16a,b (the first and second sensors 17a,b detect the magnets 16a,b when the magnets 16a,b are moved passed the respective sensors 17a,b) ; for example if the first sensor 17a detects the magnets 16a,b first followed by the second sensor 17b then it can be determined that the pulling member 5 rotates in an anti-clockwise direction; likewise if the second sensor 17b detects the magnets 16a,b first followed by the first sensor 17a then it can be determined that the pulling member 5 rotates in a clockwise direction. The position of the pulling member 5 determined with the sensors 17a,b is transmitted to the microcontroller and used for calibrating the sensorless determination of the position at each turn.

Signals which are output from the first and/or second Hall sensor(s) 17a,b are used for recalibrating the sensorless position detection system 15.

The apparatus 1 further comprises a loading tube 21, visible in Fig. 1, which is connected to a guide tube 22, visible in Fig. 2, which extends inside the housing 18 of the apparatus to the tension adjusting means 6. The wire 4 may be loaded manually by the user into the apparatus 1 via the loading tube 21 and may be guided to the tension adjusting means by the guiding tube 22. Typically a large coil of wire will be carried by a user in a backpack; the large coil of wire forms a wire reserve which will provide the wire required for a plurality of bindings. In one embodiment the coil of wire comprises a passive RFID tag. In another embodiment the coil is contained in a container inside the backpack, this container comprising an electronic module communicating, in a unidirectional or bidirectional way, with the electronic module of the binding apparatus, which is contained in the backpack too.

The apparatus 1 is connected to a power source and to the electronic control circuit with microcontroller by means of a power and data cable 19. The power source may comprise one or a plurality of batteries, for example a set of batteries connected as described in EP2451044, the contents of which is hereby enclosed by reference. The batteries, an electronic battery management system, and the electronic control circuit with microcontroller for controlling the motors 7, 11 may be hold in a backpack, preferably in the same backpack that also holds the wire coil.

Alternatively, part of the electronic circuit with microcontroller, or even the whole circuit for driving and controlling the motors, may be provided in the hand-held housing.

The power from the power source can be used to supply all the components of the apparatus 1 and in particular the first and second motors 7,11. The apparatus 1 further comprises a first operating button 20 which the user presses to actuate the apparatus 1 to begin binding the wire 4 around the branch 3 and support 2. In one embodiment the apparatus 1 may comprise a second operating bottom 20', visible in Fig. 1, and which can be actuated by the thumb of the user. In another embodiment the apparatus comprises only the second operating bottom 20'.

In an alternative embodiment the hand-held binding apparatus may further comprise a system for automatically actuating the apparatus to begin binding when the branch 3 and support 2 are engaged by the apparatus. For example, the system may comprise an optical, capacitive or touch sensor for detecting when the branch 3 and support 2 have been received within the C-shaped pulling member 5; upon detection the system will automatically actuate the hand-held binding apparatus to perform binding without the user having to press any buttons.

Before use the user first loads the wire 4 into the apparatus 1. Typically an end of wire coil which is held in the back pack carried by the user is loaded into the apparatus via the loading tube 21. The user pushes the wire 4 through the loading tube 21 and into a guide tube 22; as the user continues to push the wire 4 into the loading hole, the guide tube 22 will direct the wire so that it is received into the tension adjusting means 6. At this moment the user presses the operating button 20: the pulling member 5 is then moved by the first motor 7 so as to place its open part in front of the cutting system; in the same time the rollers of the tension adjusting means 6 driven by the second motor 11 start to rotate at a low speed (i.e. at a speed less that 300 rpm) so as to advance (by pushing and/or by pulling) the wire 4. The user does not need any more to push the wire. The wire is then received into the cutting system 13. The tension adjusting means 6 continue to push and/or pull the wire so that the wire extends through the cutting system 13. Alternatively, the wire may be pushed by the user only until the wire extends through the cutting system 13.

The wire pushed by the user or by the rollers 6 goes through a hole or gap through the cutting system 13 and goes beyond the rotatable element 14 so that the end of the wire protrudes from the apparatus 1 near the pulling member 5. The user then manually takes the wire and pulls it for a while. In the same time he stops to press the operating button 20. Then the pulling member 5 comes back to its initial position (represented e.g. in Fig. 2) and by its rotation cuts the part of the wire exceeding from the rotatable element 14. The apparatus is then ready for use.

During use the user positions the apparatus 1 so that the branch 3 and the support 2 are received within the C-shaped pulling member 5. The user then presses the operating button 20: the wire is then pulled and/or pushed by the rollers of the tension adjusting means 6 so that it is engaged in the engaging means 57 and it is bent by the fixed pin 56 on the engaging means 57. The pulling member 5, along with the engaging means 57, is then moved by the first motor 7 around the branch 3 and the support 2; since the wire 4 is held by the pulling member 5 by its contact with the engaging means 57, as the pulling member 5 is moved around the branch 3 and the support 2, it will pull the wire 4 around the branch 3 and the support 2.

As the pulling member 5 is moved around the branch 3 and support 2, the software stored in the software module controls the second motor 11 to operate the tension adjusting means 6 so that the tension in the wire 4 is maintained within a predefined range for wire tension. The software stored in the software module may also control the first motor 7 to regulate the speed at which the pulling member 5 moves around the branch 3 and support 2. More generally, the software run by the microcontroller controls the speed of rotation of the first motor 7 and the speed of rotation of the second motor 11 so that a predefined wire tension is reached; the tension is determined for example based on the torque that the first motor 7 needs to exert for rotating the pulling member 5 at the predefined speed, and/or based on the torque or speed of rotation of the second motor 11.

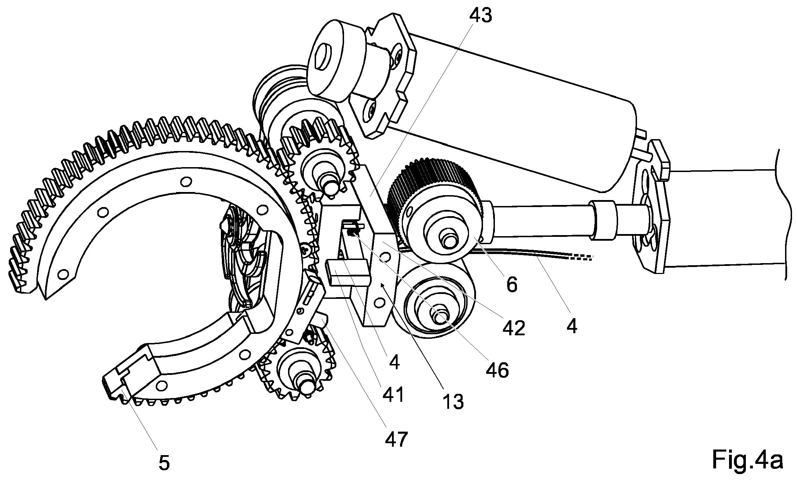

Immediately after the pulling member 5 has been moved around the branch 3 and support 2, the cutting system 13 is actuated to cut the wire 4 so that the section of wire which has been moved around the branch 3 and support 2 is cut from the rest of the wire. The cutting system is actuated by the pin 47 on to pulling member 5 that displaces the moving part 41 of the cutting system so as to cut the wire while the pulling member 5 terminates its rotation. A spring 46, visible in Fig. 4a, or any other suitable mechanical or electronic returning means known by the man skilled in the art, then returns the moving part 41 to its initial position in order to be ready to cut the next wire. In one embodiment the cutting system comprises a stop for limiting the displacement of the moving part 41.

Once the wire has been cut, the end of the cycle is determined by the microcontroller based on data from the sensorless position determination system. The microcontroller then stops the rotation of the first motor 7, and inverts the sense of rotation of the second motor 11 so as to stop the driving of the rollers in the tension adjusting means 6, and to actuate the rotatable element 14 so that the ends of the section of wire are twisted around each other a predetermined number of times, to complete the binding.

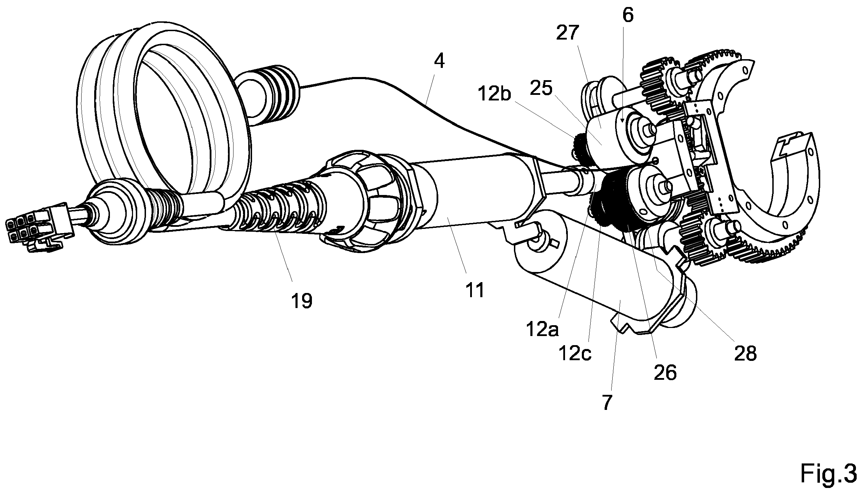

Figure 3 provides a perspective view of the tension adjusting means 6 used in the hand-held binding apparatus 1 shown in Figures 1 and 2.

In this example the tension adjusting means 6 comprises a first roller 25 and second roller 26 each of which is arranged to mechanically cooperate with the wire 4 by friction. The first and second rollers 25,26 are arranged adjacent one another and the wire 4 is arranged to extend between the first and second rollers 25,26. In this example, the first roller comprises a smooth surface 27 with which the wire 4 mechanically cooperates by friction and the second roller 26 comprises a corrugated surface 28 with which the wire 4 mechanically cooperates by friction.

The second motor 11 actuating the tension adjusting means 6 to selectively push or restrain the wire 4 is also shown in Figure 3. First, second and third gears 12a,b,c are provided which transmit the torque force generated by the second motor 11 to the first and second rollers 25,26. The second gear 12b is fixed to the first roller 25 and the third gear 12c is fixed to the second roller 26. The second and third gears 12b,c each comprise teeth which engage teeth on the first gear 12a fixed to a shaft 29 which is rotated by the second motor 11.

The second motor 11 will operate to adjust the speed of rotation of the first and second rollers 25,26 so that the tension in the wire 4 is adjusted. For example, if the first and second rollers 25,26 are rotated at a high speed (i.e. at a speed which is faster than the speed at which the pulling member 5 is pulling the wire 4) then the first and second rollers 25,26 will push the wire 4 in the direction which the pulling member 5 is pulling the wire 4 so that the tension in the wire 4 is decreased. Conversely if the first and second rollers 25,26 are rotated at a low speed (i.e. at a speed which is lower than the speed at which the pulling member 5 is pulling the wire 4) then the first and second rollers 25,26 will restrain the wire 4 which the pulling member 5 is pulling so that the tension in the wire 4 is increased. It should be noted that the speed at which the pulling member 5 pulls the wire is the speed at which the pulling member 5 is moved around the branch 3 and support 2 by the first motor 7.

It will be understood that it is not essential that the tension adjusting means comprises two rollers 25,26; in another embodiment the tension adjusting means 6 may comprise one single roller only which mechanically cooperates with the wire 4 by friction. The single roller may take the same configuration of either the first or second rollers 25,26 shown in Figure 3. In this case the second motor 11 will operate to adjust the speed of rotation of the single roller so that the tension in the wire 4 is adjusted. It will also be understood that the smooth and corrugated surfaces 27,28 provided on the first and second rollers 25,26 is not essential and the surface of the rollers 25,26 may have any other suitable configuration.

The electronic circuit that drives the electric motors 7, 11 is able to determine the current supplied to at least one of the first or second motors 7,11 so as to detect tension in the wire 4. In a DC motor, this current is related to the torque exerted by the motor, and thus to the tension in the wire 4. The measured electrical current is passed to the software module; the software in the software module is configured to determine the tension in the wire 4 from the measured electrical current.

If the branch 3 and support 2 around which the wire 4 is to bind have large diameters, then the current which is required by the first motor 7 to move the pulling member 5 around the branch 3 and support 2 will be large since there will be a large friction between the wire 4 and branch 3 and support 2; conversely if the branch 3 and support 2 around which the wire 4 is to bind have smaller diameters, and/or a smoother surface, then the current which is required by the first motor 7 to move the pulling member 5 around the branch 3 and support 2 will be smaller since there will be a smaller friction between the wire 4 and branch 3 and support 2.

The tension in the wire 4 which is determined by the software is then compared to the predefined range for wire tension which is stored in the software to detect if the tension in the wire is within the predefined range for wire tension.

As already mentioned the software stored on the software module controls the tension adjusting means 6 and/or the speed at which the pulling member 5 moves around the branch 3 and support 2 so that the tension in the wire is maintained within the predefined range for wire tension.

If the determined tension is not within the predefined range for wire tension, then preferably the software will adjust the tension adjusting means 6 accordingly so that the tension in the wire 4 is brought to within the predefined range for wire tension. Specifically, the software will adjust the speed at which the second motor 11 rotates the first and second rollers 25,26 so that the tension in the wire 4 is adjusted to be within the predefined range for wire tension. For example, to decrease the tension in the wire 4 the software may adjust the second motor 11 so that the speed at which the first and second rollers 25,26 push the wire is equal or nearly equal to the speed at which the pulling member 5 pulls the wire. Conversely, to increase the tension in the wire 4 the software will adjust the second motor 11 so that it causes the first and second rollers 25,26 to push the wire at a speed which is slower than the speed at which the pulling member 5 pulls the wire 4; to achieve this the software will adjust the second motor 11 so that it rotates at a slower speed.

If the determined tension is not within the predefined range for wire tension, then alternatively, or additionally, the software may adjust the speed at which the first motor 7 moves the pulling member 5 around the branch 3 and support 2 so that the tension in the wire 4 is brought to within the predefined range for wire tension. For example, to decrease the tension in the wire 4 the software may adjust the first motor 7 so that it moves the pulling member 5 around the branch 3 and support 2 at a speed which is slower than the speed of rotation of the first and second rollers 25,26; to achieve this the software will adjust the first motor 7 so that it pulls the wire 4 at a speed close to the speed at which the first and second rollers 25, 26 push the wire. Conversely to increase the tension in the wire 4 the software may adjust the first motor 7 so that it pulls the wire 4 around the branch 3 and support 2 at a speed which is faster than the speed at which first and second motors 25,26 push the wire.

The software which is stored in the software module may also be configured to control the tension adjusting means 6 so that the length of wire 4 which is moved around the branch 3 and support 2 by the pulling member 5 is within a predetermined range for wire length. To achieve this the software will control the second motor 11 so that the speed of the first and second rollers 25,26 are rotated at the appropriate speed to ensure that the length of wire 4 which is moved around the branch 3 and support 2 is within the predetermined range for wire length.

To decrease the length of the wire 4 which is moved around the branch 3 and support 2 the software will adjust the second motor 11 so that it causes the first and second rollers 25,26 to push the wire 4 at a speed which is slower than the speed at which the pulling member 5 pulls the wire 4, so that the wire tension will be increased and the wire length decreased. Conversely to increase the length of the wire 4 which is moved around the branch 3 and support 2 the software will adjust the second motor 11 so that it causes the first and second rollers 25,26 to push the wire 4 at a speed which is faster than the speed at which the pulling member 5 pulls the wire 4, so as to reduce the wire tension and increase its length.

The set range for wire length may be stored in the software at the manufacturing stage.

Thus the software can control the tension adjusting means 6 so that the tension within the wire 4 is within a predefined range for wire tension and/or so that the length of wire 4 which is moved around the branch 3 and support 2 by the pulling member 5 is within a predefined range for wire length.

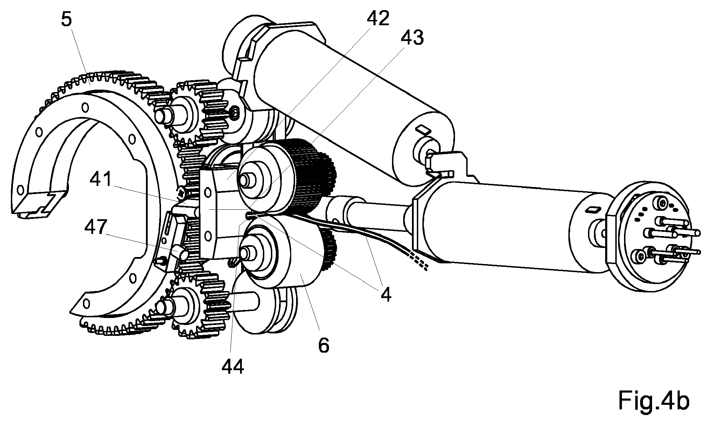

Figures 4a and 4b each provide perspective views of the cutting system 13, used in the hand-held binding apparatus 1 shown in Figs. 1 and 2, to cut the wire 4. In particular the cutting system 13 is used to cut the section of the wire which has been moved around the branch 3 and support 2 from the rest of wire, so that the section of wire is mechanically independent from the rest of the wire.

The cutting system 13 comprises a moveable cutting member 41 and a wire holder 42 which holds the wire 4. The cutting member 41 is pivotable around an axis (not shown), and thus movable relative to the wire holder 42 so that the wire 4 can be cut. In this example the wire holder 42 comprises a block 43 with a channel 44 defined therein through which the wire 4 can pass. The channel preferably has a frusto-conical profile to facilitate engagement of the wire on the upstream side. The cutting member 41 can move across a mouth of the channel 44 so that the wire 4 is cut at the mouth of the channel 44.

An actuating member 47, in the form of a projecting member 47, is further provided on the pulling member 5. The actuating member 47 is preferably located proximate to an end of the pulling member 5. In one embodiment, in order to improve the robustness of the apparatus, another Hall sensor on the apparatus's body (not visible in the Figures) cooperates with another magnet on the pulling member 5 (not visible in the Figures) so as to send a message to the first motor 7 and/or to the second motor 11 in order to stop its or their rotation just before the cutting of the wire.

In a preferred embodiment the actuating member is placed on the pulling member at an angle belonging to the range 5°-30°, said angle being formed between the actuating member and an ideal horizontal line having the same direction of the main length of the apparatus.

During use, immediately after the pulling member 5 has moved the wire 4 around the branch 3 and support 2, the actuating member 47 is moved by further rotation of the pulling member 5, to abut the moveable cutting member 41. The movement of the pulling member 5 pushes the actuating member 47 against the moveable cutting member 41 to force the cutting member 41 to rotate and move across the mouth of the channel 44 in the wire holder 42 so that the wire 44 is cut at the mouth of the channel 44. A spring (not shown) is provided for returning the moveable cutting member to its initial position after the wire has been cut.

Once cutting is complete a section of wire, which extends around the branch 3 and support 2, is mechanically independent of the rest of the wire.

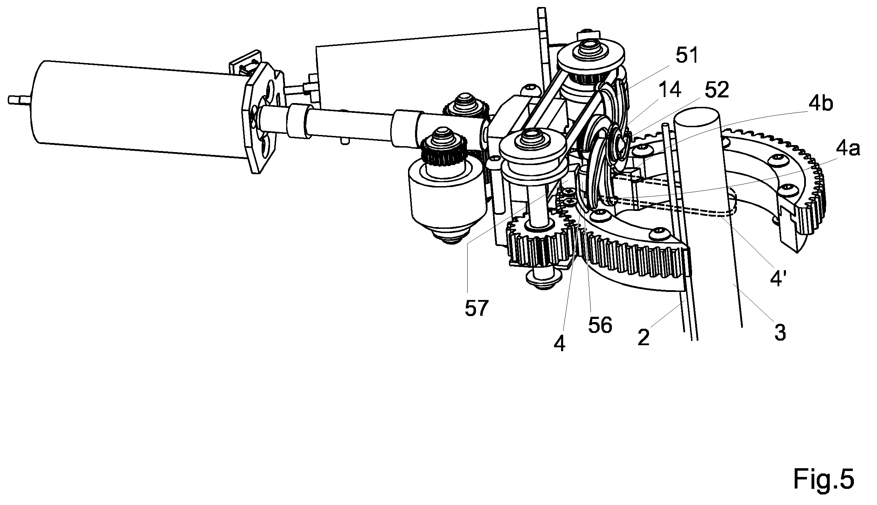

Figure 5 provides a perspective view of the rotatable element 14 used in the hand-held binding apparatus 1 shown in Figs. 1 and 2. The section of wire 4' which has been moved around the branch 3 and support 2 and which has been cut from the rest of the wire 4 by the cutting system is shown as a dashed line. The rotatable element 14 is operable to twist opposite ends 4a,4b of the section of the wire 4', around each other to complete the binding, and to release this section from the engaging means 57 on the pulling element 5. The rotatable element 14 comprises a plurality of blades 51 which radiate from a central hub 52.

The rotatable element 14 is positioned such that as the pulling member 5 moves the wire 4 around the branch 3 and support 2, the wire 4 will be moved so that it extends between the blades 51 of the rotatable element 14; thus immediately after the section of wire 4' which extends around the branch 3 and support 2 has been cut from the rest of the wire by the cutting system 13, the opposite ends 4a,b of the section of wire 4' will already be positioned between the blades 51 of the rotatable element 14 ready for twisting. Preferably, the rotatable element 14 is positioned such that the pulling member 5 will move the wire 4 between two different pairs of blades 51 of the rotatable element 14. Advantageously, the user is not required to manually position the opposite ends 4a,b of the section of the wire 4' between the blades 51, and immediately after the wire 4 has been cut by the cutting system 13 the rotatable element 14 can actuated to twist the opposite ends 4a,b of the section of the wire 4' around each other to complete the binding.

As discussed above the second motor 11 actuates the tension adjusting means 6. In this embodiment the second motor 11 is also used to actuate rotatable element 14. The second motor is configured to actuate the tension adjusting means when the second motor is rotated in a first direction and to actuate the rotatable element when the second motor is rotated in a second, opposite, direction.

During use, the wire 4 is moved between the blades 51 of the rotatable element 14 by the pulling member 5 as the pulling member 5 moves the wire 4 around the branch 3 and support 2. Thus when the wire 4 is cut by the cutting system 13 to define the wire section 4' the opposite ends 4a,b of the wire section 4' are already located between the blades 51 of the rotatable element 14. Preferably the pulling member 5 moves the wire 4 between two different pairs of blades 51 so that the opposite ends 4a,b of the section of the wire 4' are located between the two different pairs of blades 51.

Immediately after the cutting system 13 has cut the wire 4, the rotatable element 14 is rotated. As the rotatable element 14 rotates the blades 51 will twist the opposite ends 4a,b of a section of the wire 4' around each other.

The rotatable element 14 is configured to rotate a predefined number of times so that the opposite ends 4a,b of the section of the wire 4' are twisted around each other a predefined number of times. The predefined number of times which the rotatable element 14 rotates may be set at the manufacturing stage.

In another embodiment the hand-held binding apparatus further comprises a means for selecting the number of times which the opposite ends 4a,b of the section of the wire 4' are twisted around each other. This enables a user to adjust the number of times which the opposite ends 4a,b of a section of the wire 4' are twisted around each other.

Once the opposite ends 4a,b of the section of the wire 4' have been twisted around each other the binding is complete, and the branch 3 will be bound to the support 2 by the section of wire 4'. The pulling member 5 then rotates further to be in position for receiving the end of the wire 4 and pulls the next stretch or wire.

The tension in the final binding is influenced by the length of wire which was moved by the pulling member around the branch 3 and support 2 (i.e. the length of the wire section 4') and the number of times which the opposite ends 4a,b of the section of the wire 4' are twisted around each other. For the same length of section of wire 4' the tension of the binding will increase with an increasing number of twists which are provided at the ends 4a,b of the section of wire 4' and will decrease with a decreasing number of twists which are provided at the ends 4a,b of the section of wire 4'. Likewise for the same number of twists provided at the ends 4a,b of the section of wire 4', the tension in the binding will increase with a decreasing length of the section of wire 4', and will decrease with an increasing length of the section of wire 4'. Accordingly, a user may achieve a binding which has any particular tension by adjusting the apparatus 1 to move the appropriate length of wire around the branch 3 and support 2 and to provide the appropriate number of twists in the ends 4a,b of the section of wire 4'.

Figure 5 also illustrates how the pulling member 5 holds the wire 4; an engaging means 57 is secured to the pulling member 5. It is a fixed member 57. A fixed pin 56 is provided for bending the portion of wire that passes through a channel in the fixed section 57 when the pulling member is rotated, so as to bend the wire.

## Claims

1. A hand-held binding apparatus (1) for binding a branch (3) to a support (2) using wire (4), the binding apparatus comprising,
a housing;
a pulling member (5) which can hold a wire (4), and which is operable to move around the branch (3) and support (2), so that the pulling member (5) pulls the wire (4) around said branch (3) and support (2);
a cutting system (13) comprising a wire holder (43) which is fixed relative to the housing and which can hold the wire (4), and a cutting member (41) which is mounted pivotably with respect to the wire holder,
an actuating member (47) which can engage the cutting member (41) to cut the wire, wherein the actuating member is provided on the pulling member (5) and positioned on the pulling member such that the actuating member (47) engages the cutting member (41) to force the cutting member to rotate relative to the wire holder to cut the wire after the pulling member has moved around the branch and support.

2. The hand-held binding apparatus according to claim 1,
wherein a means such as a spring is provided to return the cutting member to its initial position when released by the actuating member (47).

3. The hand-held binding apparatus according to any one of the claims 1 or 2, wherein the actuating member (47) comprises a projection which is pushed by the pulling member (5) against the cutting member (41) to rotate the cutting member with respect to the wire (4).

4. The hand-held binding apparatus according to any one of the claims 1 to 3, wherein the wire holder (43) comprises a block in which a channel (44) is defined, through which the wire (4) can extend.

5. The hand-held binding apparatus according to claim 4
wherein the channel (44) defined in the block (4) has a frusto-conical profile.

6. The hand-held binding apparatus according to one of the claims 4 or 5, wherein the cutting member (41) is arranged such that it is moveable across a mouth of the channel (44) to cut a wire (4) which extends through the channel.

7. The hand-held binding apparatus according to one of the preceding claims, wherein the apparatus further comprises a rotatable element (14) which is operable to twist opposite ends of said wire (4) after said wire has been cut.

8. The hand-held binding apparatus according to any one of the preceding claims wherein the binding apparatus comprises a first motor (7) for actuating the pulling member (5) to move around said branch (3) and support (2) and wherein the apparatus comprises one or more gears which transmit torque generated by the first motor to the pulling member (5) so that the pulling member (5) can be moved around the branch and support.

9. The hand-held binding apparatus according to claim 8 further comprising a software module in which software is stored, wherein the software is configured to control the speed of rotation of the first motor so that a cutting speed applied to the wire by the cutting system is within a predefined range.

10. The hand-held binding apparatus according any one of the preceding claims wherein the apparatus further comprises a tension adjusting means (6) which is selectively operable to push, or restrain, said wire (4) which the pulling member pulls, to adjust the tension in the wire.

11. The hand-held binding apparatus according any one of the claims 8 to 10, wherein the apparatus further comprises a Hall sensor on the apparatus's body, wherein the pulling member (5) comprises a magnet, said Hall sensor and said magnet are arranged to cooperate so as to send a message to the first motor (7) and/or to a second motor (11) in order to stop its or their rotation just before the cutting of the wire.

12. A method for binding a branch to a support using wire, the method comprising the steps of:
pulling a wire (4) around a branch (3) and support (2) using a pulling member (5) which moves around the branch and support;
using an actuating member (47) which is provided on the pulling member (5) for actuating a pivoting cutting member (41) which is moveable with respect to a wire holder to cut the wire after the pulling member has been moved around the branch and support;
twisting opposite ends of the section of wire (4') around each other a predetermined number of times, after the wire has been cut by the cutting system.

13. The method according to claim 12, wherein the actuating member (47) is a projection which is provided on the pulling member (5), and wherein the step of actuating a cutting system to cut wire to provide a section of wire comprises the step of rotating the pulling member (5) such that said projection (47) is pushed against the cutting member (41) to pivot the cutting member (41) with respect to wire holder (43) to cut the wire (4).

14. The method according to any one of claims 12 or 13, comprising the steps of:
introducing one end of said wire (4) into said apparatus (1);
engaging said end in said pulling member (5);
actuating a first motor (7) rotate said pulling member (5) so as to carry out said step of pulling the wire (4) around the branch (3) and support (2);
interrupting said first motor (7) immediately after the wire has been cut by the cutting system;
actuating a second motor (11) to carry out said step of twisting opposite ends of the section of wire.

15. The method according to claim 14, further comprising:
actuating at least one roller (6) to push said wire (4) by friction.

16. The method of claim 15, wherein said roller (6) is actuated to push said wire (4) while it is simultaneously pulled by said pulling member (5), wherein the speed of said roller and the speed of said pulling member are controlled so as to control the tension of said wire (4) when it is pulled and pushed.

17. The method of claim 16, wherein said roller is actuated by the second motor (11) rotating in a first direction during said step of pulling the wire, and wherein said motor rotates in the reverse direction for carrying out said step of twisting opposite ends of the section of wire.

## Patentansprüche

1. Eine tragbare Bindevorrichtung (1) zum Binden eines Asts an eine Stütze unter Verwendung eines Drahts (4), die Bindevorrichtung aufweisend,
ein Gehäuse;
Ziehelement (5), das einen Draht (4) halten kann und das ausgebildet ist, sich um die Stütze (2) und den Ast (3) zu bewegen, so dass das Ziehelement (5) den Draht (4) um den Ast (3) und die Stütze (2) zieht;
ein Schneidessystem (13) aufweisend einen Drahthalter (43), der relativ zu dem Gehäuse fest ist und der den Draht (4) halten kann, und ein Schneideelement (41), das relativ zu dem Drahthalter (43) drehbar befestigt ist,
ein Auslöseelement (47), das das Schneideelement (41) zum Abschneiden des Drahts bringen kann, wobei das Auslöseelement auf dem Ziehelement (5) bereitgestellt wird und so auf dem Ziehelement (5) positioniert ist, dass das Auslöseelement (47) das Schneideelement (41) dazu bringt, das Schneideelement relative zu dem Drahthalter zu drehen, um den Draht, nach dem das Ziehelement (5) sich um den Ast und die Stütze bewegt hat, abzuschneiden.

2. Die tragbare Bindevorrichtung nach Anspruch 1, wobei ein Mittel, wie z.B. eine Feder, bereitgestellt wird, um das Schneideelement in seine Ausgangsposition zurückzubringen, wenn von dem Auslöseelement losgelassen.

3. Die tragbare Bindevorrichtung nach einem der Ansprüche 1 oder 2, wobei das Auslöseelement (47) eine Projektion aufweist, die von dem Ziehelement (5) gegen das Schneideelement (41) gedrückt wird, um das Schneideelement in Bezug zu dem Draht zu drehen.

4. Die tragbare Bindevorrichtung nach einem der Ansprüche 1 bis 3, wobei der Drahthalter (43) einen Block aufweist, in dem ein Kanal (44) definiert ist, durch welchen sich der Draht (4) erstrecken kann.

5. Die tragbare Bindevorrichtung nach Anspruch 4, wobei der Kanal (44) in dem Block (4) ein kegelstumpfförmiges Profil hat.

6. Die tragbare Bindevorrichtung nach einem der Ansprüche 4 oder 5, wobei das Schneideelement (41) so angeordnet ist, dass es durch eine Mündung des Kanals (44) bewegbar ist, um einen Draht (4), der sich durch den Kanal erstreckt, abzuschneiden.

7. Die tragbare Bindevorrichtung nach einem der vorigen Ansprüche, wobei die Vorrichtung weiter ein rotierbares Element (14) aufweist, das ausgebildet ist, entgegengesetzte Enden des Drahts (4), nachdem dieser Draht abgeschnitten wurde, zu verdrehen.

8. Die tragbare Bindevorrichtung nach einem der vorigen Ansprüche, wobei die tragbare Bindevorrichtung einen ersten Motor (7) für das Auslösen des Ziehelements (5) aufweist, um um den Ast (3) und die Stütze (2) bewegt zu werden, und wobei die Vorrichtung einen oder mehrere Zahnräder aufweist, die ein von dem ersten Motor erzeugtes Drehmoment auf das Ziehelement (5) zu übertragen, so dass das Ziehelement (5) um den Ast und die Stütze bewegt werden kann.

9. Die tragbare Bindevorrichtung nach Anspruch 8, weitere aufweisend ein Softwaremodul, in dem Software gespeichert ist, wobei die Software so ausgebidlet ist, um die Drehgeschwindigkeit des ersten Motors zu steuern, so dass die von dem Abschneidesystem auf den Draht angewandte Abschneidegeschwindigkeit innerhalb einem vordefinierten Bereich ist.

10. Die tragbare Bindevorrichtung nach einem der vorigen Ansprüche, wobei die Vorrichtung weiter ein Spannungsanpassungsmittel (6) aufweist, das selektiv betriebsfähig ist, um den Draht (4), den das Ziehelement zieht, auszufahren oder zurückzuhalten, um die Spannung des Drahts anzupassen.

11. Die tragbare Bindevorrichtung nach einem der Ansprüche 8 bis 10, wobei die Vorrichtung weiterhin einen Hallsensor auf dem Vorrichtungsgehäuse aufweist, wobei das Ziehelement (5) einen Magnet aufweist, wobei der Hallsensor und der Magnet so angeordnet sind, um so zusammenzuarbeiten, dass eine Nachricht an den ersten Motor (7) und/oder an einen zweiten Motor (11) gesendet wird, um seine/ihre Drehung kurz vor dem Schneiden des Drahts zu stoppen.

12. Verfahren zum Binden eines Asts an eine Stütze unter Verwendung eines Drahts (4), aufweisend die Schritte:
Ziehen eines Drahts (4) um einen Ast (3) und Stütze (2) unter Verwendung eines Ziehelements (5), das sich um den Ast und die Stütze bewegt;
Verwenden eines Auslöseelements (47), das auf dem Ziehelement (5) bereitgestellt ist, um ein drehbares Schneideelement (41) auszulösen, das sich in Bezug auf ein Drahthalter beweglich ist, um den Draht, nachdem das Ziehelement sich um den Ast und die Stütze bewegt hat, abzuschneiden;
Verdrehen der entgegengesetzten Enden des Drahtteils (4') eine vorbestimmte Anzahl Mal umeinander, nachdem der Draht von dem Abschneidesystem abgeschnitten wurde.

13. Das Verfahren nach Anspruch 12, wobei das Auslöseelement (47) ein Vorsprung ist, der auf dem Ziehelement (5) bereitgestellt ist, und wobei der Schritt des Auslösens eines Schneidessystems, um den Draht abzuschneiden, um einen Drahtteil bereitzustellen den Schritt des Drehens des Ziehteils (5) aufweist, so dass der Vorsprung (47) gegen das Schneideelement (41) gedrückt wird, um das Schneideelement (41) relativ zu dem Drahthalter (43) zu drehen, um den Draht abzuscheiden.

14. Das Verfahren nach einem der Ansprüche 12 oder 13, aufweisend die Schritte des:
Einführen eines Endes des Drahtes in die Vorrichtung (1);
Eingreifen des Endes in das Ziehelement (5);
Auslösen eines ersten Motors (7), um das Ziehelement (5) zu drehen, um so den Schritt des Ziehens des Drahts (4) um den Ast (3) und die Stütze (2) auszuführen;
Unterbrechen des ersten Motors (7) sofort nachdem der Draht von dem Abschneidesystem abgeschnitten wurde;
Auslösen eines zweiten Motors (11), um den Schritt des Verdrehens der entgegengesetzten Enden des Drahtabschnitts auszuführen.

15. Das Verfahren nach Anspruch 14 weiter aufweisend:
Auslösen mindestens eines Wicklers (6), um den Draht durch Reibung zu drücken.

16. Das Verfahren nach Anspruch 15, wobei der Wickler (6) ausgelöst wird, um den Draht (4) zu drücken, während er gleichzeitig von dem Ziehelement (5) gezogen wird, wobei die Geschwindigkeit des Wicklers (6) und die Geschwindigkeit des Ziehelements so gesteuert werden, um die Spannung des Drahts (4) zu steuern, wenn er gezogen und gedrückt wird.

17. Das Verfahren nach Anspruch 16, wobei der Wickler von dem in eine erste Richtung drehenden zweiten Motor (11) während dem Schritt des Ziehens des Drahtes ausgelöst wird, und wobei der Motor in die Gegenrichtung rotiert, um den Schritte des Verdrehens der entgegengesetzten Enden des Drahtabschnitts auszuführen.

## Revendications

1. Appareil de fixation portatif (1) pour fixer une branche (3) à un support (2) utilisant un fil (4), l'appareil de fixation comprenant
un boîtier;
un élément de traction (5) qui peut tenir un fil (4), et qui est apte à se déplacer autour de la branche (3) et du support (2), de façon à ce que l'élément de traction (5) tire le fil (4) autour de ladite branche (3) et dudit support (2) ;
un système de coupe (13) comprenant un support du fil (43) qui est fixe relativement au boîtier et qui peut tenir le fil (4), et un élément de coupe (41) qui est monté pivotant par rapport au support du fil,
un élément d'actionnement (47) qui peut engager l'élément de coupe (41) pour couper le fil,
dans lequel l'élément d'actionnement est prévu sur l'élément de traction (5) et placé sur l'élément de traction de façon à ce que l'élément d'actionnement (47) engage l'élément de coupe (41) pour forcer l'élément de coupe à tourner relativement au support du fil pour couper le fil après que l'élément de traction s'est déplacé autour de la branche et du support.

2. L'appareil de fixation portatif selon la revendication 1, dans lequel un moyen comme un ressort est prévu pour faire retourner l'élément de coupe à sa position initiale lors qu'il est relâché par l'élément d'actionnement (47).

3. L'appareil de fixation portatif selon l'une des revendications 1 ou 2, dans lequel l'élément d'actionnement (47) comprend une saillie qui est poussée par l'élément de traction (5) contre l'élément de coupe (41) pour faire tourner l'élément de coupe par rapport au fil (4).

4. L'appareil de fixation portatif selon l'une des revendications 1 à 3, dans lequel le support du fil (43) comprend un bloc dans lequel un canal (44) est défini, à travers lequel le fil (4) peut s'étendre.

5. L'appareil de fixation portatif selon la revendication 4, dans lequel le canal (44) défini dans le bloc (4) a un profil tronconique.

6. L'appareil de fixation portatif selon l'une des revendications 4 ou 5, dans lequel l'élément de coupe (41) est arrangé de façon à ce qu'il peut être déplacé à travers une ouverture du canal (44) pour couper un fil (4) qui s'étend à travers le canal.

7. L'appareil de fixation portatif selon l'une des revendications précédentes, dans lequel l'appareil comprend en outre un élément rotatif (14) qui est apte à torde les extrémités opposées dudit fil (4) après que ledit fil a été coupé.

8. L'appareil de fixation portatif selon l'une des revendications précédentes, dans lequel l'appareil comprend un premier moteur (7) pour actionner l'élément de traction (5) à se déplacer autour de ladite branche (3) et dudit support (2) et dans lequel l'appareil comprend un ou plusieurs engrenages qui transmettent le coupe généré par le premier moteur à l'élément de traction (5) de façon à ce que l'élément de traction (5) puisse se déplacer autour de la branche et du support.

9. L'appareil de fixation portatif selon la revendication 8, comprenant en outre un module de logiciel dans lequel un logiciel est stocké, dans lequel le logiciel est configuré pour contrôler la vitesse de rotation du premier moteur de façon à ce qu'une vitesse de coupe appliquée au fil par le système de coupe soit dans une plage prédéfinie.

10. L'appareil de fixation portatif selon l'une des revendications précédentes, dans lequel l'appareil comprend en outre un moyen d'ajuster la tension (6) qui est apte à pousser, ou retenir, de façon sélective ledit fil (4) que l'élément de traction tire, de façon à ajuster la tension dans le fil.

11. L'appareil de fixation portatif selon l'une des revendications 8 à 10, dans lequel l'appareil comprend en outre un capteur de Hall sur le corps de l'appareil, dans lequel l'élément de traction (5) comprend un aimant, ledit capteur de Hall et ledit aimant sont configurés pour coopérer de façon à envoyer un message au premier moteur (7) et/ou à un deuxième moteur (11) de façon à arrêter sa ou leur rotation juste avant la coupe du fil.

12. Une méthode pour fixer une branche à un support utilisant un fil, la méthode comprenant les étapes de :
tirer un fil (4) autour d'une branche (3) et d'un support (2) utilisant un élément de traction (5) qui se déplace autour de la branche et du support;
utiliser un élément d'actionnement (47) qui est prévu sur l'élément de traction (5) pour actionner la rotation d'un élément de coupe (41) qui peut se déplacer par rapport à un support de fil pour couper le fil après que l'élément de traction a été déplacé autour de la branche et du support;
tordre les extrémités opposées de la section du fil (4') l'une autour de l'autre un nombre prédéfini de fois, après que le fil a été coupé par le système de coupe.

13. La méthode selon la revendication 12, dans laquelle l'élément d'actionnement (47) est une saillie qui est prévue sur l'élément de traction (5), et dans lequel l'étape d'actionnement d'un système de coupe pour couper le fil pour fournir une section du fil comprend l'étape de tourner l'élément de traction (5) de façon à ce que ladite saillie (47) soit poussée contre l'élément de coupe (41) pour faire pivoter l'élément de coupe (41) par rapport au support de fil (43) pour couper le fil (4).

14. La méthode selon l'une des revendications 12 ou 13, comprenant les étapes de :
introduire une extrémité dudit fil (4) dans ledit appareil (1);
engager ladite extrémité dans ledit élément de traction (5) ;
actionner un premier moteur (7) pour faire tourner ledit élément de traction (5) de façon à réaliser ladite étape de tirer le fil (4) autour de ladite branche (3) et dudit support (2) ;
interrompre ledit premier moteur (7) immédiatement après que le fil a été coupé par le système de coupe;
actionner le deuxième moteur (11) pour réaliser ladite étape de torsion des extrémités opposées de la section de fil.

15. La méthode selon la revendication 14, comprenant en outre :
actionner au moins un rouleau (6) pour pousser ledit fil (4) par friction.

16. La méthode selon la revendication 15, dans laquelle ledit rouleau (6) est actionné pour pousser ledit fil (4) en même temps qu'il est simultanément tiré par ledit élément de traction (5), dans laquelle la vitesse dudit rouleau et la vitesse dudit élément de traction sont contrôlées de façon à contrôler la tension dudit fil (4) quand il est tiré et poussé.

17. La méthode selon la revendication 16, dans laquelle ledit rouleau est actionné par le deuxième moteur (11) tournant dans une première direction pendant ladite étape de tirer le fil, et dans laquelle ledit moteur tourne dans une direction inverse pour réaliser ladite étape de tordre les extrémités opposée de la section de fil.
